Europäisches Patentamt

**European Patent Office**

**Office européen des brevets**

(11) Publication number: **0 011 880**
**B2**

(12) **NEW EUROPEAN PATENT SPECIFICATION**

(45) Date of publication of the new patent specification:
**19.04.89**

(21) Application number: **79200007.7**

(22) Date of filling: **05.01.79**

(51) Int. Cl.⁴: **G 01 C 21/00,** G 05 D 1/02

(54) A vehicle guidance system.

(30) Priority: **04.12.78 EP 78200337**

(43) Date of publication of application:
**11.06.80 Bulletin 80/12**

(45) Publication of the grant of the patent:
**02.03.83 Bulletin 83/9**

(45) Mention of the opposition decision:
**19.04.89 Bulletin 89/16**

(84) Designated Contracting States:
**DE FR GB IT NL**

(56) References cited:
**US-A-3 789 198**

**"Entwicklungslinien in Kraftfahrzeugtechnik und StraBenverkehr", Forschungsbilanz 1978, Verlag TÜV Rheinland, S. 610-631**

(73) Proprietor: **Gebre, Admasu, Kerkstraat 22, NL- 3741 AK Baarn (NL)**

(72) Inventor: **Gebre, Admasu, Kerkstraat 22, NL- 3741 AK Baarn (NL)**

EP 0 011 880 B2

## Description

## A vehicle guidance system

The invention relates to a system that gives instruction of directions with the effect that a driver is enabled to manoeuvre the vehicle from one point to any other desired destination, even though he had no previous knowledge of the route. The system is digital and operates at a low current, the source of which is the vehicle's battery.

The vehicle as we know it today has come a long way in relieving the driver from stress and making him as comfortable as possible during his journey. The one main factor remaining is that he has still to find his way about and sometimes under difficult conditions. In cases where he is in an area of which he has no prior knowledge his difficulties increase. The cost in terms of stress, time and money becomes high.

GB-A-1 297 644 discloses a route progress indicating device for motor vehicles and has for an object the provision of such a device that will give to a driver (or passenger) a continuous indication as to position along a predetermined route and instructions as to how to proceed as those positions are reached, thus rendering unnecessary periodic references to a road map.

According to GB-A-1 297 644; there is provided a route progress indicating device for motor vehicles comprising a housing adapted for attachment to an instrument panel of the vehicle and provided with a guide track, at least one feed sprocket rotatably mounted with its teeth protruding into the guiding plane of said track and adapted to engage perforations formed in a strip of paper, film or the like sheet material intended to run on said track and containing data appertaining to a preselected route, said guide track terminating at each end in a tray for supporting a rolled up portion of a data strip being driven along the track by the sprocket, and reduction gearing rotatably mounted in said housing and connecting said sprocket to a main driving gear adapted to be connected by a cable drive unit to the speeds meter drive unit in the gearbox of the vehicle. With the vehicle in motion and the cable drive connected by a cable drive unit to the speedometer drive unit in the gearbox of the vehicle. route) will be caused to travel along the guide track to give to the driver of the vehicle, or other observer, continuous indications as to position along the route, as the calibrations pass a datum mark in the guide track, and instructions (noted on the strip in association with the calibrations) as to how to proceed as various points are reached along the route.

The system according to GB-A-1 297 644 is totally mechanical. An error made by the driver puts him in the same position as a driver without a guidance system.

US-A-3 786 422 discloses an anti-hijack system for vehicles, and more particularly concerns a system for monitoring the route travelled by a vehicle, for comparing key points in the route travelled with a preprogrammed route, and for providing signals usable to disable the vehicle and to actuate an alarm if the route travelled differs materially from the preprogrammed route at any of the key points. It is thus necessary for the driver to know the intended route.

GB-A-1 414 490 discloses navigational aids for land vehicles in which data including coded known distance signals and verbal instructions for the following of a chosen route, are recorded - for example, on tape - and the instructions are reproduced audibly in equipment carried by the vehicle for the guidance of the driver under the general supervision of means for comparing the known distance signals with travelled distance signals derived from a mechanism such as a conventional mileometer responsive to the actual distance travelled by the vehicle. The system aims at providing an automatic check on the accuracy of this mileometer and of the navigation of the vehicle in response to the verbal instructions, and this is achieved by comparing the progress of the vehicle at a preselected point on the route where a significant change of direction is required to be made with the prerecorded data relating to the point.

More specifically, the system provides means for recording and reproducing data signals representative of distance to be travelled to, and of magnitude and sense of a change of heading at, a preselected point on the chosen route; a compass and associated means for generating signals representative of the magnitude and sense of the swinging of the compass in response to a change of heading; means for comparing recorded change of heading signals with their compass-generated counterparts; means responsive to the known distance data record for triggering the heading comparison means, and means controlled by an mileometer for confirming the correct directional progress of the vehicle at the preselected point or generating an alarm signal in response to incorrect performance.

Preferably, signals representative of the distance to and change of heading at the preselected point are prerecorded simultaneously with, or immediately before or after, the signals representing the known distance of the route, or of a stage thereof, and have an identifying characteristic - e.g. pulse repetition frequency - whereby they are recognisable by a component of the vehicle-borne reproducing equipment for selective transmission to respective distance, left turn, right turn, and angle of change of heading logic circuits.

If a turn is correctly made, the consequent compass signals representing magnitude and sense of the change of heading are compared with the prerecorded data signals and if they agree, a synchronising signal is generated which zeroises the known-distance/distance-travelled comparator in the equipment. Thus, confirmation is automatically secured of the accuracy of the driver's navigation of the route, and at the same time the accumulated mileometer error is cancelled. The preselected point may mark the beginning of a new stage of the route for which new instructions and data signals will have been prerecorded, and the equipment will be reset for these.

If a turn is not correctly made, the compass signal comparator registers inequality with the prerecorded data signals and emits an alarm signal. At the same time, the known-distance/distance-travelled synchronising signal is suppressed. Since it is now irrelevant for the equipment to continue issuing route instructions, a lock-out signal is issued in substitution for the synchronising signal, and this prevents further reproduction of audible instructions until a manual reset control is operated. If the driver recognises that he has missed the turn at the preselected point, he may now retrace his incorrect route until he can make the appropriate turn and then operate the reset control to reactivate the recording of the verbal instructions and associated data signals, whereupon the equipment resumes its regular function. Since it may be some miles before the preselected point can be regained and the error corrected, automatic lock-out is a necessary provision in order to avoid loss of valuable information and the complete disorientation of the route guidance system.

The system according to GB-A-1 414 490 also has the disadvantage that an error made by the driver puts him in the same position as a driver without a guidance system. In all the cited prior art documents each destination needs a separate route programming. This poses a disadvantage in that the step by step computing of the route is accomplished by a programmer e.g. the motorist himself and not by the system.

The invention provides a vehicle guidance system as defined in claim 1.

The vehicle guidance system according to the invention alleviates difficulties in travelling from one place to another. It eliminates unnecessary apprehension and errors. The invention has got numerous advantages. It contributes towards a safe traffic system by directing the driver to be in correct lane for correct turning, and encourages more and more people to take alternative routes instead of converging to the centre of a town or a city. It can be programmed to avoid one way streets, diversions and congested areas. Most of all it helps the driver by doing most of the thinking in guiding the vehicle towards the desired destination.

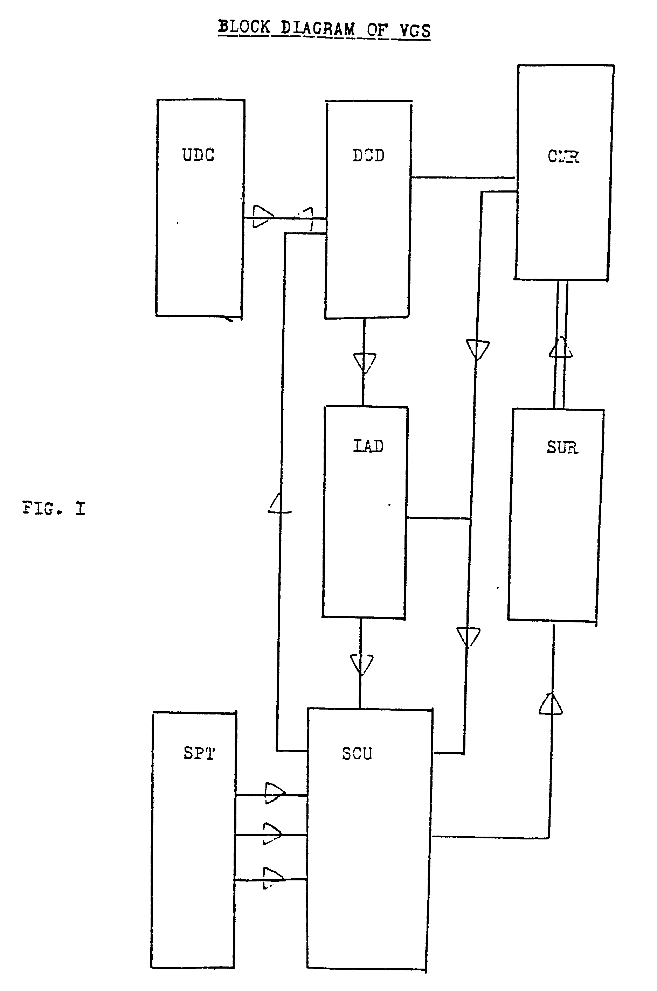

The Figure is a block diagram of the complete system. The card memory register (CMR) stores information from a programmed punched card. The exact distance to be covered and the direction accompanying an instruction are registered in binary form. The value of the exact distance to be covered becomes the starting point for the up and down counter (UDC). When the vehicle is in motion a pulse is generated for each actual one meter distance covered. This pulse is fed to the clock input of the up and down counter (UDC). The difference of distance programmed and distance covered is continuously displayed on the difference distance display (DCD). Circuitry is provided to switch through instructions and directions to the instruction and direction unit (IAD) when the DCD displays 200 meters. Instructions are "Keep" and "Turn". Directions are "Left" "Right Middle lane" and "U". All of them are analysed by the instruction and direction unit (IAD) and then passed to the system control unit (SCU).

The (SCU) checks if the driver has followed the instruction and if this is found to be positive triggers the step up relay (SUR) which in turn rotates the card thereby bringing the next program step into the card memory register (CMR). If however the instruction has not been carried out properly the system realises the error and instructs a "U" turn to be taken in order to bring the vehicle back to the point where at first error occurred. It then issues the correct instruction. A provision for all kinds of possible errors has been integrated.

The information as to whether a driver has made an error comes from the steering position trigger (SPT) circuit.

## Claims

1. Vehicle guidance system comprising:
(a) memory means for storing groups of binary data, in which each group includes a coded distance, instruction and direction signal,
(b) means (SUR) for addressing the memory means,
(c) a register (CMR) for storing one of said groups of binary data selected by said addressing means,
(d) means for generating a signal representing a distance travelled,
(e) comparator means (UDC) responsive to the coded distance signal in the register (CMR) and to the signal representing distance travelled for generating a signal representing the difference between the coded distance and the distance travelled,
(f) means responsive to the signal from the comparator means for switching through the instruction and direction signal in the register (CMR) to an instruction and direction unit (IAD),
(g) means (SPT) for generating a signal representing a change of course of the vehicle, and
(h) control means (SCU) responsive to signals from the instruction and direction unit (IAD), the register (CMR) and the signal representing the change of course of the vehicle for checking whether the driver correctly followed the instruction and direction, and for triggering the addressing means (SUR) to select the next group

of data if the driver has followed the instruction and direction correctly,

characterised in that the control means (SCU) is so arranged that if the driver does not follow the instruction and direction signal correctly, the system instructs the driver to make a U-turn to bring the vehicle back to the point where the error occurred and then issues the correct instruction.

2. A vehicle guidance system according to claim 1 in which means are provided for producing one pulse for each meter of the distance travelled.

**Patentansprüche**

1. Fahrzeug-leitsystem bestehend aus:

a) Speichermöglichkeiten für binäre Datengruppen. Jede Gruppe enthält eine kodierte Strecke, ein Anweisungs- und ein Richtungszeichen.

b) Möglichkeiten (SUR) zur Eingabe des Speichers.

c) ein Register (CMR) zur Speicherung eine der obengenannten binären Datengruppen gewählt über die erwähnten Eingabemöglichkeiten,

d) Möglichkeiten zur Erzeugung eines Signals zur Wiedergabe des zurückgelegten Weges.

e) Ein Vergleicher (UDC) reagierend auf die kodierte abzufahrende Strecke im Register (CMR) und auf das Signal des zurückgelegten Weges. Der Vergleicher erzeugt ein Signal, das die Abweichung zwischen der eingegebenen Strecke und dem zurückgelegten Weg anzeigt.

f) Die Angabesignale des Vergleichers geben Anweisungen mittels Anweisungs- und Richtungssignale aus dem Register (CMR) an eine Anweisungs- und Richtungseinheit (IAD).

g) Möglichkeiten (SPT) um ein Signal zu erzeugen, das eine Kursänderung des Fahrzeugs anzeigt und

h) Steuerbefehle reagierend auf Signale der Anweisungs- und Richtungseinheit (IAD), des Registers (CMR) das Signal, das die Kursänderung des Wagens darstellt zur Prüfung ob der Fahrer den Anweisungen und der Strecke richtig folgt, und für das Löschen der Adressen um die folgenden binären Datengruppen zu wählen, wenn der Fahrer die Anweisung und Richtung richtig ausgeführt hat.

Kennzeichnend ist das die Steuerglieder (SCU) so geordnet sind, dass bei nicht genau folgen des Anweisungs- und Richtungssignals das System den Fahrer auffordert umzudrehen und das Fahrzeug zurückzubringen zu dem Punkt wo der Fehler gemacht wurde und dann wieder die richtigen Anweisungen erteilt.

2. Ein Fahrzeug-leitsystem gemäss Forderung I mit Vorrichtungen um einen Puls für jeden zurückgelegten meter Weg zu erzeugen.

**Revendications**

1. Système de guidage pour véhicule comprenant:

(a) des moyens de mémoire pour stocker des groupes de données binaires, chaque groupe comprenant une distance codée, et un signal d'instructions et de directions,

(b) des moyens (SUR) d'appel aux moyens de mémoire,

(c) un enregistreur (CMR) pour stocker un desdits groupes de données binaires sélectionné par lesdits moyens d'appel,

(d) des moyens pour engendrer un signal représentant une distance parcourue,

(e) des moyens de comparateur (UDC) sensibles au signal de distance codé dans l'enregistreur (CMR) et au signal représentant la distance parcourue pour engendrer un signal représentant la différence entre la distance codée et la distance parcourue,

(f) des moyens sensibles au signal des moyens de comparateur pour transmettre le signal d'instructions et de direction se trouvant dans l'enregistreur (CMR) à une unité d'instructions et de direction (IAD),

(g) des moyens (SPT) d'engendrer un signal représentatif d'un changement de trajectoire du véhicule et,

(h) des moyens de contrôle (SCU) sensibles à des signaux provenant de l'unité d'instruction et de direction (IAD), de l'enregistreur (CMR) et au signal représentant un changement de trajectoire du véhicule pour contrôler si le conducteur suit correctement les instructions et la direction, et pour déclencher les moyens d'appel (SUR) pour sélectionner le groupe suivant de données si le conducteur a suivi correctement les instructions et la direction,

caractérisé en ce que: les moyens de contrôle (SCU) sont conçus de manière à ce que si le conducteur ne suit pas correctement le signal d'instructions et de direction, le système ordonne au conducteur de faire demi-tour pour ramener le véhicule à l'endroit où s'est produite l'erreur, puis donne l'instruction correcte.

2. Un système de guidage véhicule, selon le revendication 1, dans lequel on a prévu des moyens de production d'une impulsion pour chaque mètre de distance parcourue.

BLOCK DIAGRAM OF VGS

FIG. I